Europäisches Patentamt

European Patent Office

Office européen des brevets

(11) Publication number: **0 228 954**
**A1**

(12) **EUROPEAN PATENT APPLICATION**

(21) Application number: **86402803.0**

(22) Date of filing: **15.12.86**

(51) Int. Cl.⁴: **H 04 M 11/06**

(30) Priority: **13.12.85 US 808787**

(43) Date of publication of application:
**15.07.87 Bulletin 87/29**

(84) Designated Contracting States: **ES**

(71) Applicant: **DIGITAL EQUIPMENT CORPORATION**
**146 Main Street**
**Maynard, MA 01754 (US)**

(72) Inventor: **Blanchard, Dennis R.**
**143 East Road**
**Hampstead New Hampshire 03841 (US)**

Bruckert, Edward A.
15 Elmwood Street
Maynard Massachusetts 01754 (US)

Conroy, David G.
78 Concord Street
Maynard Massachusetts 01754 (US)

Ellison, Richard D.
70 Mulberry Street
Worcester Massachusetts 01605 (US)

Vitale, Anthony J.
22 St James Drive
Northboro Massachusetts 01532 (US)

(74) Representative: **Dubois-Chabert, Guy**
**Société de Protection des Inventions 25, rue de Ponthieu**
**F-75008 Paris (FR)**

(54) Telephone line interface option module.

(57) The invention is an apparatus (option module) (50) for interfacing an electronic device (main module) (10) to a telephone network. The invention contemplates that the main module, in a preferred embodiment, is a text-to-speech device. The interconnection of an electronic device with the telephone network is generally controlled by government regulations. Since there are many governments, there are many different sets of regulations. The option module is an implementation of a telephone line interface that isolates a main module, in particular, a text-to-speech device, from different and/or changing regulations.

EP 0 228 954 A1

**Description**

TELEPHONE LINE INTERFACE OPTION MODULE

BACKGROUND OF THE INVENTION

The invention is a telephone line interface employed for coupling an electronic device, hereinafter main module, to a public telephone (PT) network, and is, therefore, subject to a large set of telephone interconnect regulations. Examples of such main modules include modems, telephone message systems, video-text storage systems, or, as in the preferred embodiment, a text-to-speech device. In the United States and Canada, meeting these regulations is quite straightforward (the regulations in the United States and Canada are essentially the same). However, in the rest of the world, there are many countries with different (and frequently changing) regulations. Additionally, the regulations can be plain barrier regulations.

In general, the problem of PT interconnect is solved by modifying the main module to conform to a particular country's regulations. In every prior solution, the main module is involved in some way with making the system conform to the regulatory issues. This coupling is unpleasant. A dependency between the main module and an option module is disadvantageous because it means that the option module may have to be recertified any time a change to the the main module is made. Since the base module changes with each language, many different combinations of base module and option module are possible.

SUMMARY OF THE INVENTION

The invention eliminates the dependency between the main module and the interfacing option module. In a preferred embodiment, the option module employs a small computer, wherein, the option module is made responsible for all of the details of the interface to the telephone network. If an option module is present, the main module defers all judgment about telephone interfacing to the option module.

The option module is an independent piece of hardware employing a programmable CPU. The option module can even be certified on a test fixture. The main module can not do anything to make the option module do something illegal on the telephone line. The main module can be changed at will, and the telephone certification is not compromised. In addition, the telephone interface module can be re-used. Any time a telephone product is built, the standard option module for a given country is used, and a certified product is produced.

Uncoupling the two modules provides for independent development of telephone line interfaces and main modules. Developers of main modules can work without any concern for the details of the telephone line interface option modules. Developers of telephone line interfaces can also work in isolation. If a country changes its regulations, then the developer for that country's telephone line can react to it, without any effect on any other telephone line interface option.

Brief Description of the Drawings

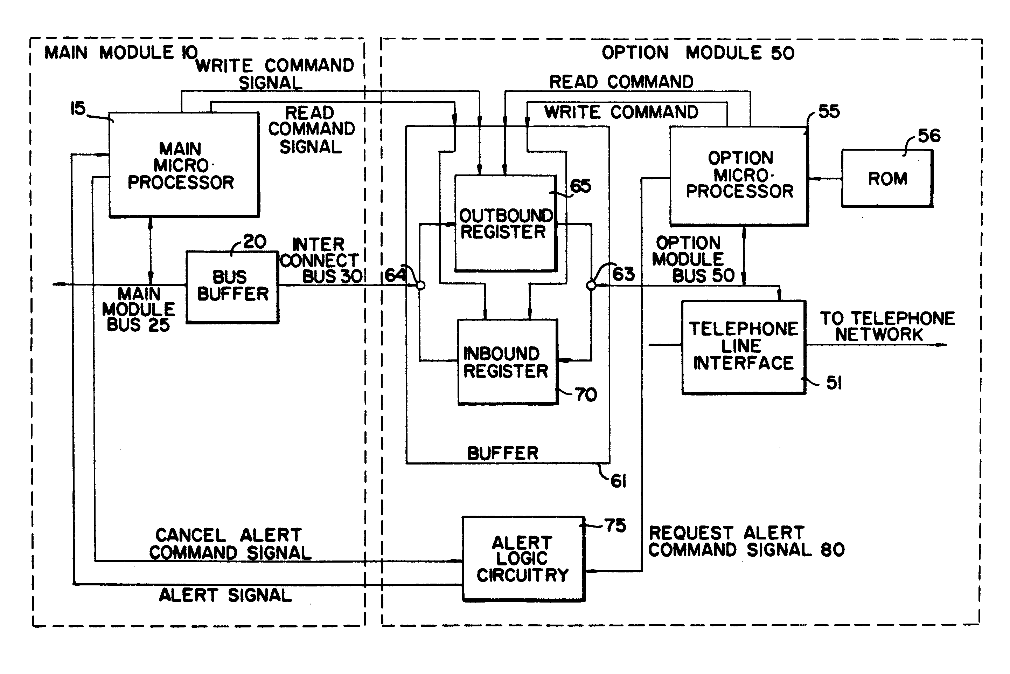

Figure 1 is a block diagram illustrating the invention.

Description of the Preferred Embodiment

The invention is an apparatus (option module) for interfacing an electronic device (main module) to a telephone network. The invention contemplates that the main module, in a preferred embodiment, is a text-to-speech device. The interconnection of an electronic device with the telephone network is generally controlled by government regulations. Since there are many governments, there are many different sets of regulations. The option module is an implementation of a telephone line interface that isolates a main module, in particular, a text-to-speech device, from different and/or changing regulations.

Figure 1 illustrates a main module 10, representing a text-to-speech device, coupled to a telephone network by a telephone line interface option module 50. The main module is shown to have a microprocessor 15, and the option module is shown to have a microprocessor 55; however, it would be possible to build both the main module 10 and option module 50 without microprocessors. The microprocessor 15, in the preferred embodiment, is an Intel 80186. Telephone line interface circuitry 51 is the physical connection between the phone system network and the option module. This circuitry insures compliance with the electrical connection requirements of the telephone regulations.

The computer on the option module stores inputted microcode that is responsible for enforcing telephone regulations. The microcode can be changed so that the option module conforms to different or varying regulations. These regulations are usually in the form of escape sequences in which the main module is disconnected from the telephone network. The main module employs microcode, running on the microprocessor is, which determines if an option module is present. when the option module is connected, the main module relinquishes responsibility for handling these escape sequences to the option module.

There is also a channel in the reverse direction (from the option module to the main module) so that the option module can send replies to the host. The main module provides formatting services, but essentially nothing else.

The main module 10 and the option module 50 communicate with each other by sending information packets, with predefined formats, through a physical communication link. The packets are between 1 and 255 bytes in length. The physical communication link comprises a series of three bus structures, including, a main module bus 25, an interconnect bus 30 and an option module bus 60. The transmission of the information packets is conducted in conformance to the stored regulations on the option module.

A bus buffer 20, located on the main module 10, couples the main module bus 25 to the interconnect bus 30. A buffer 62 comprising an outbound register 65 and an inbound register 70, both located on the option module 50, couple the option module bus 60 to the interconnect bus 30. This interface is implemented by two connectors located on the main module, wherein, a pair of plugs located on the option module, connect. The buffer 62 has an option port 63 coupled to the option module bus 60, a main port 64 coupled to the interconnect bus 30, and a control port 66 for coupling control signals from the microporcessor 15 and the microprocessor 55.

A protocol is used to actually transport data between the modules. This protocol initiates, as well as, monitors, transfers of data. Microcode, stored in microprocessor 55, represents the telephone interconnect regulations for a particular country and insures that the protocol is followed. The microprocessor 55, running the microcode, determines when information should be transmitted and generates control signals to implement the telephone regulations.

The outbound register 65 stores data that is flowing from the main module 10 to the option module 50. The data is written by the main module, and read by the option module. The main module initiates an outbound transfer after waiting until the outbound register 65 is empty. Waiting is necessary as the outbound register 65 may still contain the last byte of the last outbound transfer. There are some electronics, not illustrated, that generate a flag control signal. The flag signal is set TRUE when the main module writes data, and set FALSE by the option module when data is read by the option module. The flag serves to tell the option module microprocessor 55 that there is a packet size byte of data, waiting in the outbound register 65, for reading.

The inbound register 70 stores data transmitted from the option module to the main module. The data is written by the option microprocessor 55 and read by the main microprocessor 15 through the bus buffer 20. There is a similar flag, a second control signal, set TRUE by an option module write, and set FALSE by main module read, which notifies the main module that there is data in the inbound register.

The option microprocessor 55, because it is dedicated to a control task, can poll the flag control signal associated with the outbound register 65, to determine if there is any data to be read. The main microprocessor 15 is not dedicated to control functions, and therefore, polling the inbound register is not feasible. The invention employs alert logic 75 for keeping both of the microprocessors 15 and 55k abreast of the status of information flow. The option microprocessor 55, having data for the main microprocessor 15, transfers the data to the inbound register 70. A request alert command signal 80 is then generated by the option microprocessor 55. This signal 80 is inputted to the alert logic 75. In response, the alert logic 75 sends an alert signal 35 to the main processor 15 to alert the main processor 15 that the data is present. The main processor is interrupted. The main processor uses the "cancel alert command" signal 40 to make the alert go away (it has noticed it already), and then it reads the data from the inbound register, using the flag to decide when each byte in the packet is available.

The data packets are of variable length. The first data byte is always an opcode byte. This byte, in addition to specifying the function of the packet, implicitly determines the format of the remaining data in the packet.

The option module controls the rate at which the main module sends data to the telephone network. After an outbound packet is sent, the main module waits for a proceed packet before sending another outbound packet. This permits option modules to control the rate at which data is interfaced between the main module and the telephone network.

It is also to be understood that the following claims are intended to cover all of the generic and specific features of the invention herein described.

## Claims

1) A telephone line interface option module for coupling an electronic main module to a telephone network, wherein, said network is subject to a set of interconnect regulations, said option module comprising:
buffer means having an option port, a main port and a control port,
a first data bus for exchanging data between the telephone network to said buffer means option port,
a second bus, coupled to said buffer means main port, for exchanging data with said main module,
processor means, coupled to said first bus and to said buffer means control port, for controlling the exchange of said data between said option module and the telephone line in conformance to said interconnect regulations, said processor further comprising means for storing said interconnect regulations,

2) An interface option module, as claimed in claim 1, further comprising:
alert logic means, coupled between said processor means and said main module, wherein, said processor means generates a request alert control signal when data is ready for exchange, and said alert logic means alerts said main module in response to said request alert control signal.

3) An interface option module, as claimed in claim 2, said buffer means further comprising:
an outbound register and an inbound register, said inbound register having an output port coupled to said second bus and an input port coupled to said first bus, said outbound register having an input port coupled to said second bus and an output port coupled to said first bus, wherein, data stored in said inbound register is transmitted to said main module over said second bus in response to a read control signal from said main module, and data is inputted into said inbound register from said first data bus in response to a write control signal from said processor, and

said outbound register output port outputting data to said first data bus in response to a read control signal from said processor, and wherein, data from said second bus is written into said outbound register in response to a write command from said main module.

4) A method for coupling an electronic main module to a telephone network comprising the method steps of:

interfacing a telephone line interface module between said telephone network and said main module, wherein said interfacing further comprises the method steps of:

storing a plurality of telephone interconnect regulations,

controlling the transmission of data between said telephone network and said main module in accordance with said stored entertainment regulations, wherein said controlling further comprises the method steps of:

storing, temporarily, data for transmission,

generating interrupt control signals when data is being transmitted,

transmitting said data in the absence of an interrupt signal.

MAIN MODULE 10

OPTION MODULE 50

WRITE COMMAND SIGNAL

READ COMMAND

READ COMMAND SIGNAL

WRITE COMMAND

15

MAIN MICRO-PROCESSOR

55

OPTION MICRO-PROCESSOR

56

ROM

65

OUTBOUND REGISTER

20

BUS BUFFER

INTER CONNECT BUS 30

64

MAIN MODULE BUS 25

63

OPTION MODULE BUS 50

TELEPHONE LINE INTERFACE

TO TELEPHONE NETWORK

51

INBOUND REGISTER

70

BUFFER

61

CANCEL ALERT COMMAND SIGNAL

75

ALERT LOGIC CIRCUITRY

REQUEST ALERT COMMAND SIGNAL 80

ALERT SIGNAL

0228954

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 142 302  (ATT)<br>* Page  3, lines 17-28; page 13, line 21 - page 14, line 12;  page 16, lines 14-34; abstract; figure 2 *<br><br>--- | 1-4 | H 04 M   11/06 |
| Y | THE RADIO AND ELECTRONIC ENGINEER, vol. 46, no. 2, February 1976, pages 76-82, London, GB; C.J. KELLEY: "A peripheral-sharing interlinked mini-computer system"<br>* Paragraphs 4,5 *<br><br>----- | 1-4 | |

TECHNICAL FIELDS SEARCHED (Int. Cl.4)

H 04 M
G 06 F

The present search report has been drawn up for all claims

| Place of search | Date of completion of the search | Examiner |
|---|---|---|
| THE HAGUE | 25-03-1987 | MIKKELSEN C. |